# EUROPÄISCHE PATENTSCHRIFT

(11) **EP 1 625 189 B1**
(45) Veröffentlichungstag und Bekanntmachung des Hinweises auf die Patenterteilung: **19.11.2008**
(21) Anmeldenummer: 04731584.1
(22) Anmeldetag: 07.05.2004
(51) Int. Cl.: C09J 131/00

(54) **WASSERLÖSLICHER SCHMELZKLEBSTOFF**
WATER-SOLUBLE HOT-MELT ADHESIVE
ADHESIF THERMOFUSIBLE SOLUBLE DANS L'EAU

(30) Priorität: 19.05.2003 DE 10322782
(43) Veröffentlichungstag der Anmeldung: 15.02.2006
(73) Patentinhaber: Henkel AG & Co. KGaA, 40589 Düsseldorf (DE)
(72) Erfinder: CAVALLI, Dario, I-20125 Milano (IT); CARRARA, Stefano, I-24044 Dalmine (IT); MÖLLER, Thomas, 40593 Düsseldorf (DE)
(86) Internationale Anmeldenummer: PCT/EP2004/004869
(87) Internationale Veröffentlichungsnummer: WO 2004/101697

(56) Entgegenhaltungen:
- US-A- 5 821 294

## Beschreibung

Die Erfindung betrifft einen wasserlöslichen Schmelzklebstoff, ein Verfahren zur dessen Herstellung sowie seine Verwendung in der Textil-, Verpackungs- und Papierindustrie. Die Erfindung betrifft außerdem mindestens zweilagige Papierverbunde, befeuchtungsklebrige Papiere und textile Verbunde, die den erfindungsgemäßen Schmelzklebstoff enthalten, sowie Verfahren zur Herstellung dieser Papierverbunde, befeuchtungsklebrigen Papiere und textilen Verbunde.

Schmelzklebstoffe sind Klebstoffe, die bei Raumtemperatur fest sowie wenigstens weitgehend wasser- und lösemittelfrei sind, d.h. die Menge Wasser/Lösemittel liegt unter 5 Gew.-%. Schmelzklebstoffe werden aus der Schmelze auf die zu verbindenden Substrate aufgetragen und binden beim Abkühlen durch Verfestigung ab.

Basispolymere bestimmen im wesentlichen die für die Schmelzklebstoffe wichtigen Eigenschaften wie Haftung, Festigkeit und Temperaturverhalten.

Als Basispolymere werden in Schmelzklebstoffen üblicherweise folgende Polymere eingesetzt:
Thermoplastische Polymere wie Block-Copolymere, z.B. Styrol-Butadien, Styrol-Butadien-Styrol, Styrol-Isopren-Styrol, Styrol-Ethylen-Butylen-Styrol, Styrol-Ethylen-Propylen-Styrol;
Ethylen-Vinylacetat-Polymere, andere Ethylen-Ester und Copolymere, z.B. Ethylen- mit Acrylat, Ethylen-n-Butyl-Acrylat und Ethylen-Acrylsäure;
polyolefine wie Polyethylen und Polypropylen, beispielsweise amorphe Propylen-α-Olefine (APAO);
Polyvinylacetat (PVAc) und PVAc-Copolymere, Polyacrylate, Polyamide, Polyester, Polyvinylalkohole (PVA) und PVA-Copolymere, Polyurethane, Polystyrole, Polyepoxide, Copolymere von Vinyl-Monomeren und Polyalkylenoxid-Polymere, Aldehyde, die Harze enthalten wie Phenol-Aldehyd, Harnstoff-Aldehyd, Melanin-Aldehyd und dergleichen.

Es sind sowohl haftklebrige als auch blockfeste granulierbare Klebstoffsysteme auf dem Markt.
Schmelzklebstoffe finden eine breite industrielle Anwendung in der Verpackungs-und Papierindustrie zum Versiegeln und Verschließen von Kartons, als befeuchtungsaktivierbare Klebstoffe auf Briefmarken und Briefumschlägen oder zur Herstellung mindestens zweilagiger Papierverbunde zur Verwendung als Hygienepapier. Die Anforderungen, die die Schmelzklebstoffe in diesem Industriezweig erfüllen müssen, sind vielfältig:
So müssen die Schmelzklebstoffe eine mittlere bis lange offene Zeit (definiert als Zeitspanne zwischen Klebstoffauftrag und dem Fixieren der Fügeteile) besitzen, aber nach Fixierung der Fügeteile schnell genug abbinden, um eine qualitätsgerechte Klebung, insbesondere auf schnell laufenden Verpackungs-, Papierverarbeitungs- oder Etikettiermaschinen zu gewährleisten. Neben der Abbindegeschwindigkeit ist die Viskosität ein weiteres wichtiges Kriterium für die Auswahl des Schmelzklebstoffes. Für die maschinelle Verarbeitung, speziell für einen gleichmäßigen Schmelzklebstoff-Auftrag, soll die Viskosität bei entsprechender Applikationstemperatur ausreichend niedrig sein. Für Verklebungen von Verpackungen im Tiefkühlbereich, wo das verpackte Gut bei Temperaturen bis - 35°C gelagert wird, soll eine entsprechende Kälteflexibilität vorhanden sein. Das heißt, in der Kälte soll eine hohe Festigkeit der KlebeBindung bestehen und der Klebstoff soll nicht verspröden oder brechen. Andererseits werden häufig warm oder heiß abgefertigte Lebensmittel oder Getränke verpackt, so das hier eine entsprechend hohe Standfestigkeit des Klebstoffes gefordert ist. Unter ausreichend hoher Standfestigkeit ist zu verstehen, daß der Klebstoff unter Einwirkung erhöhter Temperatur nicht erweicht oder fließt und sich dadurch die Verklebung löst und/oder die verklebten Teile sich gegeneinander verschieben. Weiterhin ist insbesondere für die Lebensmittelindustrie gefordert, möglichst geruchsfreie oder geruchsarme Schmelzklebstoffe bereit zu stellen. Komponenten, die in entsprechenden Schmelzklebstoffen eingesetzt werden, müssen über eine Lebensmittelzulassung verfügen. Zu berücksichtigen ist ferner, daß die unterschiedlichsten Substrate miteinander verklebt werden, wie Papier, Pappe, polyolefinbeschichtete Kartons und vieles mehr. Zu diesen unterschiedlichen Substraten muß eine ausreichende Adhäsion des Schmelzklebstoffes vorhanden sein.

Eine weitere Anforderung an Schmelzklebstoffe, die insbesondere zur Verklebung von Hygienepapier eingesetzt werden, besteht darin, das die Klebstoffe möglichst wasserlöslich sein sollen. Dieses Erfordernis beruht auf der hohen Recyclingquote bei der Herstellung von Hygienepapieren, d.h. das Produktionsabfälle möglichst direkt wieder bei der Herstellung neuer Papierlagen eingesetzt werden müssen. Hierzu ist es jedoch erforderlich, daß die Verklebung zwischen den einzelnen Papierlagen vollständig aus einem Recycling-Faserbrei entfernt wird. Wasserunlösliche oder schlecht wasserlösliche Klebstoffbestandteile, die während der Produktion einer neuen Papierlage aus dem recycelten Fasermaterial in die Papierbahn geraten, können zu schwerwiegenden Produktionsausfällen führen. Üblicherweise bilden solche Klebstoffreste in den recycelten Papierbahnen sogenannte "Stickies", d.h. klebrige Punkte die zu einem Festkleben der Papierbahn an Walzen oder ähnlichen Führungselementen für die Papierbahn führen können. Dies hat üblicherweise ein Abreißen der Papierbahnen und langwierige Produktionsunterbrechungen zur Folge. Es ist daher nicht nur erforderlich, dass die Verklebung durch Wasser wieder lösbar ist und dabei zur einer Dispersion des Klebstoffs in Wasser führt, sondern der Klebstoff selbst soll vollständig im Wasser löslich sein. Dadurch wird verhindert, daß eventuell ausgetragende Klebstoffreste fein verteilt zu klebrigen Agglomeraten (Stickies) führen.

Wasserdispergierbare Schmelzklebstoffe sind bekannt. So offenbart die US 4,129,539 einen in kaltem Wasser dispergierbaren Schmelzklebstoff auf Basis eines Copolymeren aus Vinylacetat und Crotonsäure, einem Kolophoniumester des Dipentaerythrits und eines aliphatischen Aminoalkohols. Ein Nachteil des offenbarten Klebstoffsystems ist, daß es keine klare wässrige Lösung bildet. Auch ist die Adhäsionskraft beim Verkleben von Papierverbunden häufig nicht ausreichend.

Aus der WO 99/59808 ist ein Verfahren zur Herstellung mindestens zweilagiger Papierverbunde oder befeuchtungsklebriger Materialien bekannt, bei dem ein wasserlöslicher Schmelzklebstoff auf Basis eines Polyalkylenglykols mit einem Molekulargewicht (Mₙ) von 1000 bis 100.000 oder eines nichtionischen Polyurethan mit einem Molekulargewicht (Mₙ) von mindestens 2000 oder eines Polyesters mit einem Molekulargewicht von mindestens etwa 3000 offenbart wird. Auch bei diesen Zusammensetzungen ist die Klebkraft häufig nicht ausreichend.

Es bestand also die Aufgabe, einen Schmelzklebstoff für die Verpackungs- und Papierindustrie zur Verfügung zu stellen, der als Schmelze auftragbar ist, noch in geringsten Auftragsmengen (weniger als 0,3 g/m²) eine feste, dauerhafte und schnelle Verklebung nach dem Zusammenfügen von Papier gewährleistet und außerdem vollständig wasserlöslich ist, d.h. mit Wasser in beliebiger Menge mischbar ist. Auch soll er für schnelllaufende Verarbeitungsprozesse auf Verpackungs- und Etikettiermaschinen sowie in der Hygienepapierherstellung und -Verarbeitung geeignet sein.

Zur Herstellung von textilen Verbunden werden textile Flächengebilde, Leder, oder Kunstleder miteinander vernäht. Übliche Nähtechniken umschließen dabei Tufting, Häkeln oder Stricken ein.

Ein Problem ist hierbei das paßgenaue Vernähen von Textilzuschnitten. Je nach Materialart- und größe sowie gewählten Verarbeitungsbedingungen können die übereinander gelegten Textilzuschnitte verrutschen, was zu Produktionsausfällen führt. Hier ist die Industrie auf der Suche nach ökonomischen Lösungen, die eine paßgenaue Fixierung der Textilzuschnitte vor dem Vernähen ermöglichen, ohne die Materialeigenschaften des vernähten textilen Verbundes nachteilig zu beeinflußen.
Ausgehend vom diesem Stand der Technik ergab sich als eine weitere Aufgabe, einen Schmelzklebstoff für die Herstellung textiler Verbunde bereitzustellen.

Die erfindungsgemäße Lösung ist den Patentansprüchen zu entnehmen.

Sie besteht im wesentlichen in einem wasserlöslichen Schmelzklebstoff, enthaltend
40 bis 70 Gew.-%, bevorzugt 45 bis 65 Gew.-% mindestens eines Homo- oder Copolymeren mit freien Carbonsäuregruppen auf Basis ethylenisch ungesättigter Monomere (Komponente A),
15 bis 45 Gew.-%, bevorzugt 20 bis 40 Gew.-% mindestens eines wasserlöslichen oder wasserdispergierbaren Polyurethans (Komponente B), und
10 bis 45 Gew.-%, bevorzugt 12 bis 35 Gew.-% mindestens einer anorganischen oder organischen Base (Komponente C), sowie
0 bis 20 Gew-% weiterer Zusatzstoffe, wobei die Summe der Komponenten 100 Gew.-% ergibt.

Der erfindungsgemäße Schmelzklebstoff ist wasserlöslich, d.h. eine Menge von 3 g des Schmelzklebstoffes löst sich vollständig in 600g Wasser bei einem pH-Wert von 5 und 8 und einer Temperatur von 40°C.
Unter "vollständigem Lösen" wird verstanden, daß sich in Wasser keine klebrigen dispers verteilten Teilchen bilden, bevorzugt bildet sich eine molekulardisperse Lösung aus.

Die im Rahmen der Erfindung einzusetzenden Homo- oder Copolymeren mit freien Carbonsäuregruppen auf Basis ethylenisch ungesättigter Monomere (Komponente A) sind erhältlich durch Homo- oder Copolymerisation von ethylenisch ungesättigten Monomeren oder Oligomeren, die mindestens eine Carboxylgruppe pro Molekül aufweisen, wie sie beispielsweise zur Synthese von Basispolymeren eingesetzt werden. Bevorzugt werden als Komponente A Polymere eingesetzt, die durch Copolymerisation von ethylenisch ungesättigten Monomeren oder Oligomeren, die keine Carboxylgruppe pro Molekül aufweisen, mit ethylenisch ungesättigten aliphatischen Copolymeren, die mindestens eine Carboxylgruppe pro Molekül aufweisen, erhältlich sind.
Als ethylenisch ungesättigtes Monomer, welches keine Carboxylgruppe aufweist, wird insbesondere Vinylacetat bevorzugt.
Beispiele für copolymerisierbare ethylenisch ungesättigte aliphatische Comonomere mit mindestens einer Carboxylgruppe sind Acrylsäure, Methacrylsäure, Crotonsäure, Isocrotonsäure, Tiglinsäure, Maleinsäure, Fumarsäure, Citaconsäure, Mesaconsäure, Itaconsäure, und Acomitsäure.

Weitere Monomere können in der Copolymerisationsreaktion verwendet werden. Beispiele weiterer Comonomere sind Ethylen, Propylen, Butylen, 1-Hexen sowie Anhydride oder Ester der bereits erwähnten ethylenisch ungesättigten Copolymere mit mindestens einer Carboxylgruppe pro Molekül.
Das Copolymere (Komponente A) besitzt bevorzugt eine Säurezahl von 10 bis 200 mg, insbesondere bevorzugt 20 bis 150 mg KOH/g (gemessen nach ASTM D 974).
Der erfindungsgemäße wasserlösliche Schmelzklebstoff enthält 40 bis 70 Gew.-%, bevorzugt 45 bis 65 Gew.-% und insbesondere bevorzugt 50 bis 60 Gew.-% von Komponente A.

In einer besonders bevorzugten Ausführungsform der Erfindung enthält der wasserlösliche Schmelzklebstoff als Komponente A ein Vinylacetat-Crotonsäure-Copolymer mit einer Säurezahl von 10 bis 200 mg KOH/g, bevorzugt 20 bis 150 mg und insbesondere bevorzugt 25 bis 100 mg KOH/g (gemessen nach ASTM D 974). Der Erweichungspunkt des Vinylacetat-Crotonsäure-Copolymeren liegt bei 80 bis 130°C, bevorzugt 90 bis 120°C (Ring-Kugel-Methode, DIN 52011). Die Molmasse (Mₙ) liegt zwischen 10.000 bis 60.000, bevorzugt 20.000 bis 50.000.

Auf polymere Verbindungen bezogene Molekulargewichtsangaben beziehen sich, soweit nicht anders angegeben ist, auf das Zahlenmittel des Molekulargewichts (Mₙ). Alle Molekulargewichtsangaben beziehen sich, soweit nicht anders angegeben ist, auf Werte, wie sie durch Gelpermeationschromatographie (GPC) erhältlich sind.

Handelsübliche Vinylacetat-Crotonsäure-Copolymere sind beispielsweise von der Firma Synthomer mit der Bezeichnung Synthomer MCT 5 oder von der Firma Wacker aus der Reihe Vinnapas® erhältlich.

Als Komponente B erhält der erfindungsgemäße wasserlösliche Schmelzklebstoff 15 bis 45 Gew.-%, bevorzugt 20 bis 40 Gew.-% und insbesondere bevorzugt 25 bis 35 Gew.-% mindestens eines wasserlöslichen oder wasserdispergierbaren Polyurethans.

Polyurethane, wie sie im Rahmen der vorliegenden Erfindung als Komponente B einsetzbar sind, werden üblicherweise durch Umsetzung von mindestens einem Polyisocyanat, vorzugsweise einem Diisocyanat, und einer Polyolkomponente, die vorzugsweise überwiegend aus Diolen besteht, hergestellt. Die Polyolkomponente kann dabei nur ein Polyol enthalten, es kann jedoch auch ein Gemisch aus zwei oder mehr verschiedenen Polyolen als Polyolkomponente eingesetzt werden. Als Polyolkomponente oder zumindest als Bestandteil der Polyolkomponente sind beispielsweise Polyalkylenoxide, insbesondere Polyethylenoxid, besonders geeignet.

Der Begriff "ionisch" bedeutet, daß das Polyurethan ionische oder zumindest im Rahmen einer Säure-Base Reaktion ionisierbare Gruppen als Löslichkeitsvermittler aufweist, beispielsweise Carboxylat-, Sulfonat, Phosphonat- oder Ammonium-Gruppen.

Der Begriff "nichtionisch" bedeutet entsprechend, daß das Polyurethan keine ionischen Gruppen als emulgierende Gruppen aufweist, also keine Carboxylat-, Sulfo nat, Phosphonat- oder Ammonium-Gruppen. Die Wasserlöslichkeit beruht vielmehr auf den hydrophilen nichtionischen Gruppen des Polyoxyethylens - [CH₂-CH₂-O-]ₙ -. Diese Struktureinheiten leiten sich insbesondere von dem bevorzugt als Polyolkomponente eingesetzten Polyethylenoxid ab. Unter Polyethylenoxid sind aber nicht nur Polyadditionsprodukte von Ethylenoxid an Wasser oder Ethylenglykol als Startmolekül zu verstehen, sondern auch Polyadditionen von Ethylenoxid an andere zweiwertige Alkohole, z. B. Butandiol, Hexandiol oder 4,4'-Dihydroxy-diphenylpropan. Es können auch Gemische aus zwei oder mehr verschiedenen Polyethylenoxiden eingesetzt werden, die sich beispielsweise im mittleren Molekulargewicht M_{w} oder Mₙ oder in beidem unterscheiden. Es können auch Copolymere von Ethylenoxid mit höheren Alkylenoxiden, z. B. mit Propylenoxid, als Polyolkomponente verwendet werden, sofern sie genügend wasserlöslich sind, d. h., mehr als etwa 3 g in etwa 100 g Wasser bei etwa 20°C über etwa 6 Monate gelöst bleiben.

Das Polyethylenoxid in der Polyolkomponente kann bis zu 10, vorzugsweise bis zu höchstens 5, insbesondere bis zu höchstens 2 Gew.-% durch andere Diole ersetzt werden, die einen hydrophoben Rest mit einer Wasserlöslichkeit von höchstens 2 g/100 g Wasser enthalten. Bei dem hydrophoben Rest handelt es sich insbesondere um aliphatische oder alicyclische Strukturen mit 2 bis 44, insbesondere 6 bis 36 C-Atomen. Die Reste können auch aromatische Strukturen enthalten. Bevorzugt sind Diole mit mindestens einer primären OH-Gruppe, insbesondere 1,2- oder α,ω-Diole. Aber auch Diole mit vicinaler Stellung der OH-Gruppen sind geeignet.

Das Polyethylenoxid in der Polyolkomponente weist vorzugsweise ein Molekulargewicht (Mₙ) von etwa 200 bis etwa 20.000 auf, insbesondere etwa 1.000 bis etwa 15.000, beispielsweise etwa 1.550, 3.000, 6.000 oder 12.000.

Ferner können bis 10, vorzugsweise 0,5 bis 5% des Polyethylenglykols durch hydrophobe homopolymere Polyalkylenglykole ersetzt werden, wobei die Alkylengruppe mehr als 2, vorzugsweise 3 oder 4 C-Atome hat. Ihre Molekulargewichte betragen insbesondere 150 bis 10.000 g/mol.
Konkrete Beispiele für die hydrophoben Diole mit reinen CH-Resten und mit Ethergruppierungen sind Polypropylenglykol (PPG), Polybutylenglykol, Polytetrahydrofuran, Polybutadiendiol, hydroxylterminierte Ethylen-Butylen-Copolymere (z.B. KRATON LIQUID Polymer L-2203), hydriertes Polybutadiendiol und Alkandiole mit 4 bis 44 C-Atomen. Bevorzugte hydrophobe Diole sind Polypropylenglykol, Polyetrahydrofuran mit einem Molekulargewicht von 150 bis 10.000, insbesondere 200 bis 4.500, besonders bevorzugt 250 bis 1.000, sowie 1,10-Decandiol, 1,12-Dodecandiol, 1,12-Octadecandiol, Dimerfettsäurediol, 1,2-Octandiol, 1,2-Dodecandiol, 1,2-Hexadecandiol, 1,2-Octadecandiol, 1,2-Tetradecandiol, 4,4-Isopropylidendicyclohexanol und deren Isomerengemische, 4,8-Bis(hydroxymethyl)tricyclo[5,2,1,0^{2,6}]decane und deren Isomerengemische, 1,4:3,6-Dianhydro-D-mannitol, 1,4:3,6-Dianhydro-D-sorbitol, 1,16-Hexadecandiol, Bisphenol-A sowie deren Prop- oder Ethoxylierungsprodukte oder deren Gemische, insbesondere mit bis zu 30 EO-Einheiten, und schließlich Monofettsäureester des Glycerins mit bis zu 22 C-Atomen enthaltenden Fettsäuren, z.B. Glycerinmorioester der Behensäure, Ölsäure, Stearinsäure, Myristinsäure. Natürlich können auch Mischungen aus zwei oder mehr der genannten hydrophoben Diole eingesetzt werden.

Das Polyethylenglykol kann ferner in einem Ausmaß von 0 bis 5, insbesondere 0,2 bis 2% durch höherfunktionelle Alkohole, insbesondere durch Triole ersetzt werden, z.B. durch Glycerin, Trimethylolpropan, Triethanolamin oder deren ethoxylierte oder propoxylierte Varianten. Auch Pentaerythrit ist brauchbar. Möglich sind auch ethoxylierte oder propoxylierte Varianten von Aminen oder Aminoalkoholen, z.B. ausgehend von Ethylendiamin, Diethylentriamin, und deren höheren Homologen, beispielsweise Aminophenol, N-2-Aminoethylpiperazin.

Um besonders hochmolekulare Polyurethane zu erhalten, sollten möglichst reine Diole eingesetzt werden. Zu diesem Zweck sollte der Gehalt an Alkali- und Erdalkalimetallionen unter 500 ppm, insbesondere unter 150 ppm und vorzugsweise unter 10 ppm liegen. Außerdem sollte der Wassergehalt unter 0,5, insbesondere unter 0,1, bevorzugt unter 0,05 Gew.-% nach K. Fischer liegen.

Neben den Diolen der Polyolkomponente sind Diisocyanate wesentliche Bausteine des als Komponente B einsetzbaren Polyurethans. Dabei handelt es sich um Verbindungen der allgemeinen Struktur O=C=N-X-N=C=O, wobei X ein alipathischer, alicyclischer oder aromatischer Rest ist, vorzugsweise ein aliphatischer oder alicyclischer Rest mit 4 bis 18 C-Atomen.

Beispielsweise seien als geeignete Isocyanate 1,5-Naphthylendiisocyanat, 4,4'-Diphenylmethandiisocyanat (MDI), hydriertes MDI (H₁₂-MDI), Xylylendiisocyanat (XDI), Tetramethylxylylendiisocyanat (TMXDI), 4,4'-Diphenyldimethylmethandiisocyanat, Di- und Tetraalkylendiphenylmethandiisocyanat, 4,4'-Dibenzyldiisocyanat, 1,3-Phenylendiisocyanat, 1,4-Phenylendiisocyanat, die Isomeren des Toluylendiisocyanats (TDI), 1-Methyl-2,4-diisocyanato-cyclohexan, 1,6-Diisocyanato-2,2,4-trimethylhexan, 1,6-Diisocyanato-2,4,4-trimethylhexan, 1-Isocyanatomethyl-3-isocyanato-1,5,5-trimethylcyclohexan (IPDI), chlorierte und bromierte Diisocyanate, phosphorhaltige Diisocyanate, 4,4'-Diisocyanatophenylperfluorethan, Tetramethoxybutan-1,4-diisocyanat, Butan-1,4--10-diisocyanat, Hexan-1,6-diisocyanat (HDI), Dicyclohexylmethandiisocyanat, Cyclohexan-1,4-diisocyanat, Ethylen-diisocyanat, Phthalsäure-bis-isocyanatoethylester, ferner Diisocyanate mit reaktionsfähigen Halogenatomen wie 1-Chlor methylphenyl-2,4-diisocyanat, 1-Brommethylphenyl-2,6-diisocyanat oder 3,3-Bis-chlormethylether-4,4'-diphenyldiisocyanat genannt. Schwefelhaltige Polyisocyanate erhält man beispielsweise durch Umsetzung von 2 mol Hexamethylendiisocyanat mit 1 mol Thiodiglykol oder Dihydroxydihexylsulfid. Weitere einsetzbare Diisocyanate sind beispielsweise Trimethylhexamethylendiisocyanat, 1,4-Diisocyanatobutan, 1,12-Diisocyanatododecan und Dimerfettsäurediisocyanat.

Besonders geeignet sind: Tetramethylen-, Hexamethylen-, Undecan-, Dodecamethylen-, 2,2,4-Trimethylhexan-, 1,3-Cyclohexan-, 1,4-Cyclohexan-, 1,3- bzw. 1,4-Tetramethylxylol-, Isophoron-, 4,4-Dicyclohexylmethan- und Lysinester-di-isocyanat.

Ganz besonders bevorzugt ist das Tetramethylxylylendiisocyanat (TMXDI), insbesondere das von der Fa. Cyanamid erhältliche m-TMXDI.

Zur weiteren Erhöhung des Molekulargewichts kann beispielsweise auf bekannte Weise eine Kettenverlängerung vorgenommen werden. Hierzu werden zunächst Präpolymere mit überschüssigem Diisocyanat hergestellt, die dann anschließend mit kurzkettigen Aminoalkoholen, Diolen, Diaminen oder mit Wasser unter Erhöhung des Molekulargewichts verlängert werden.

Hierzu werden zunächst Präpolymere mit überschüssigem Diisocyanat hergestellt, die dann anschließend mit kurzkettigen Diolen oder Diaminen oder mit Wasser verlängert werden. Als Kettenverlängerer seien konkret genannt:

gesättigte und ungesättigte Glykole wie Ethylenglykol oder Kondensate des Ethylenglykols, Butandiol-1,3, Butandiol-1,4, 2-Buten-1,4-diol, 2-Butin-1,4-diol, Propandiol-1,2, Propandiol-1,3, Neopentylglykol, Hexandiol, Bishydroxymethylcyclohexan, Dioxyethoxyhydrochinon, Terephthalsäurebisglykolester, Bernsteinsäure-di-2-hydroxyethylamid, Bernsteinsäuredi-N-methyl-(2-hydroxyethyl)amid, 1,4-Di(2-hydroxymethylmercapto)-2,3,5,6-tetrachlor
- benzol, 2-Methylen-propandiol-(1,3), 2-Methylpropandiol-(1,3), 3-Pyrrolidino-1,2-propandiol, 2-Methylenpentandiol-2,4, 3-Alkoxy-1,2-propandiol, 2-Ethylhexan-1,3-diol, 2,2-Dimethylpropandiol-1,3,1,5-Pentandiol, 2,5-Dimethyl-2,5-hexandiol, 3-Phenoxy-1,2-propandiol, 3-Benzyloxy-1,2-propandiol, 2,3-Dimethyl-2,3-butandiol, 3-(4-Methoxyphenoxy)-1,2-propandiol und Hydroxymethylbenzylalkohol;
- aliphatische, cycloaliphatische und aromatische Diamine wie Ethylendiamin,
- Hexamethylendiamin, 1,4-Cyclohexylendiamin, Piperazin, N-Methylpropylendiamin, Diaminodiphenylsulfon, Diaminodiphenylether, Diaminodiphenyldimethylmethan, 2,4-Diamino-6-phenyltriazin, Isophorondiamin, Dimerfettsäurediamin, Diaminodiphenylmethan oder die Isomeren des Phenylendiamins;
- weiterhin auch Carbohydrazide oder Hydrazide von Dicarbonsäuren;
- Aminoalkohole wie Ethanolamin, Propanolamin, Butanolamin, N-Methylethanolamin, N-Methyl-isopropanolamin, Diethanolamin, Triethanolamin sowie höhere Di- oder Tri(alkanolamine);
- aliphatische, cycloaliphatische, aromatische und heterocyclische Mono- und Diaminocarbonsäuren wie Glycin, 1- und 2-Alanin, 6-Aminocapronsäure, 4-Aminobuttersäure, die isomeren Mono- und Diaminobenzoesäuren sowie die isomeren Mono- und Diaminonaphthoesäuren.

Vorzugsweise wird das Polyurethan jedoch in einem einstufigen Verfahren hergestellt. Dabei werden beispielsweise zunächst alle Ausgangsstoffe in Gegenwart eines organischen Lösemittels bei einem Wassergehalt von weniger als 0,5 Gew.-% gemischt. Die Mischung wird für ca. 1 bis 30 Stunden auf 60 bis 200°C, insbesondere auf 80 bis 180°C und vorzugsweise auf 100 bis 150°C erhitzt.

Die Reaktionszeit kann durch Anwesenheit von Katalysatoren verkürzt werden.

Insbesondere sind tertiäre Amine geeignet, z.B. Triethylamin, 1,4-Diazabicyclo[2,2,2]octan (= DABCO) Dimethylbenzylamin, Bis-dimethylaminoethylether und Bis-Methylaminomethylphenol. Besonders geeignet sind 1-Methyl-imidazol, 2-Methyl-1-vinylimidazol, 1-Allylimidazol, 1-Phenylimidazol, 1,2,4,5-Tetramethylimidazol, 1-(3-Aminopropyl)imidazol, Pyrimidazol, 4-Dimethylaminopyridin, 4-Pyrrolidinopyridin, 4-Morpholino-pyridin, 4-Methylpyridin.

Es können auch zinnorganische Verbindungen als Katalysatoren eingesetzt werden. Darunter werden Verbindungen verstanden, die sowohl Zinn als auch einen organischen Rest enthalten, insbesondere Verbindungen, die eine oder mehrere Sn-C-Bindungen enthalten. Zu den zinnorganischen Verbindungen im weiteren Sinne zählen z.B. Salze wie Zinnoctoat und Zinnstearat. Zu den Zinnverbindungen im engeren Sinne gehören vor allem Verbindungen des vierwertigen Zinns der allgemeinen Formel Rₙ₊₁SnX₃₋ₙ, wobei n für eine Zahl von 0 bis 2 steht, R für eine Alkylgruppe oder eine Arylgruppe oder beides steht und X schließlich für eine Sauerstoff-, Schwefel- oder Stickstoff-Verbindung oder ein Gemisch aus zwei oder mehr davon steht. Zweckmäßigerweise enthält R mindestens 4 C-Atome, insbesondere mindestens 8. Die Obergrenze liegt in der Regel bei 12 C-Atomen. Vorzugsweise ist X eine Sauerstoffverbindung, also ein zinnorganische Oxid, Hydroxid, Carboxylat oder ein Ester einer anorganischen Säure. X kann aber auch eine Schwefelverbindung sein, also ein zinnorganisches Sulfid, Thiolat oder ein Thiosäureester. Bei den Sn-S-Verbindungen sind vor allem Thioglykolsäureester geeignet, z.B. Verbindungen mit folgenden Resten:

-S-CH₂-CH₂-CO-O-(CH₂)₁₀-CH₃

oder

-S-CH₂-CH₂-CO-O-CH₂-CH(C₂H₅)-CH₂-CH₂-CH₂-CH₃.

Derartige Verbindungen erfüllen eine weitere Auswahlregel: Das Molekulargewicht der zinnorganischen Verbindung soll in einer bevorzugten Ausführungsform der Erfindung über 250, insbesondere über 600 liegen.

Eine weitere bevorzugte Verbindungsklasse stellen die Dialkyl-Zinn-(IV)-Carboxylate dar (X=O-CO-R¹). Die Carbonsäuren haben 2, vorzugsweise wenigstens 10, insbesondere 14 bis 32 C-Atome. Es können auch Dicarbonsäuren eingesetzt werden. Als Säuren sind beispielsweise Adipinsäure, Maleinsäure, Fumarsäure, Terephthalsäure, Phenylessigsäure, Benzoesäure, Essigsäure, Propionsäure sowie insbesondere Capryl-, Caprin-, Laurin-, Myristin-, Palmitin- und Stearinsäure geeignet. Besonders geeignet sind beispielsweise Dibutylzinn-diacetat und -dilaurat sowie Dioctylzinn-diacetat und -dilaurat.

Auch Zinnoxide und -sulfide sowie -thiolate sind im Rahmen der vorliegenden Erfindung geeignet. Konkrete Verbindungen sind: Bis(tributylzinn)oxid, Dibutylzinndidodecylthiolat, Dioctylzinndioctylhiolat, Dibutylzinn-bis(thioglykolsäure-2-ethyl-hexylester), Octylzinn-tris-(thioglykolsäure-2-ethyl-hexylester), Dioctylzinn-bis(thioethylenglykol-2-ethylhexoat), Dibutylzinn-bis(thioethylenglykollaurat), Dibutylzinnsulfid, Dioctylzinnsulfid, Bis(tributylzinn)sulfid, Dibutylzinn-bis(thioglykolsäure-2-ethylhexylester), Dioctylzinn-bis(thioethylenglykol-2-ethylhexoat), Trioctylzinnthioethylenglykol-2-ethylhexoat sowie Dioctylzinn-bis(thiolatoessigsäure-2-ethylyhexylester), Bis(S,S-methoxycarbonyl ethyl)zinn-bis(thiolatoessigsäure-2-ethylhexylester), Bis(S,S-acetyl-ethyl)zinn-bis(thiolatoessigsäure-2-ethyl-hexylester), Zinn(II)octylhiolat und Zinn(II)-thioethylenglykol-2-ethylhexoat.

Außerdem seien noch genannt: Dibutylzinndiethylat, Dihexylzinndihexylat, Dibutylzinndiacetylacetonat, Dibutylzinndiethylacetylacetat, Bis(butyldichlorzinn)oxid, Bis(dibutylchlorzinn)sulfid, Zinn(II)phenolat, Zinn(II)-acetylacetonat, sowie weitere α-Dicarbonylverbindungen wie Acetylaceton, Dibenzoylmethan, Benzoylaceton, Acetessigsäureethylester, Acetessigsäure-n-propylester, α,α'-Diphenylacetessigsäureethylester und Dehydroacetessigsäure.

Der Katalysator wird vorzugsweise dem Polyol zugesetzt. Seine Menge richtet sich nach seiner Aktivität und den Reaktionsbedingungen. Sie liegt vorzugsweise im Bereich von 0,001 bis 0,5 Gew.-%, bezogen auf das Polyol.

Vorzugsweise wird jedoch ohne Katalysator gearbeitet. Auch das Lösemittel wird zweckmäßigerweise weggelassen. Unter "Lösemitteln" werden im Rahmen des vorliegenden Textes inerte organische flüssige Stoffe mit einem Siedepunkt von weniger als 200°C bei Normaldruck (1 bar) verstanden.

Die Umsetzung wird vorzugsweise so vorgenommen, daß das Verhältnis von OH-Gruppen in der Polyolkomponente zu NCO-Gruppen im Polyisocyanat etwa 1,0 bis etwa 2,0, insbesondere etwa 1,05 bis 1,8, beispielsweise etwa 1,1 bis 1,7 oder etwa 1,3 bis 1,6 beträgt.

Eine Möglichkeit zur Einführung von ionenbildenden Strukturelementen ist die Reaktion von OH-terminierten Polyurethanoligomeren mit Dicarbonsäureanhydriden. Diese können insgesamt 2 bis 44, vorzugsweise 2 bis 12 C-Atome zwischen den Bisacylgruppen wie Alkylen-, Alkenylen- oder Arylen-Gruppierung enthalten. Beispielsweise sind Bernsteinsäureanhydrid, Glutarsäureanhydrid, 1,2,3,6-Tetrahydrophthalsäureanhydrid und dessen Isomere, Phthalsäureanhydrid, Trimellithsäureanhydrid, 7-Oxabicyclo[2,2,1]hept-5-en-2,3-dicarbonsäureanhydrid, 5-Norbornen-2,3-dicarbonsäureanhydrid und deren Isomere, Diglykolsäureanhydrid, Maleinsäureanhydrid, Dimethylmaleinsäureanhydrid, Citraconsäureanhydrid, Itaconsäureanhydrid, Alkenylbernsteinsäureanhydride, vorzugsweise solche deren Alkenylgruppen mehr als 2 C-Atome, insbesondere mehr als 5, besonders bevorzugt mehr als 7 C-Atome besitzen, geeignet. Konkret genannt seien: n-Octenylbernsteinsäureanhydrid, n-Dodecenylbernsteinsäureanhydrid, Tetrapropenylbernsteinsäureanhydrid, n-Hexadecenylbernsteinsäureanhydrid und n-Octadenylbernsteinsäureanhydrid. Der Alkenylrest kann linear oder verzweigt aufgebaut sein. Darüber hinaus können auch Mischungen von Alkenylgruppen mit verschiedener Anzahl von C-Atomen vorkommen. Auch Gemische mehrerer Anhydride sind möglich, bevorzugt sind jedoch cyclische Anhydride.

Es ist jedoch auch möglich, einen molaren Überschuß an Isocyanaten einzusetzen, wobei NCO-terminierte Oligomere entstehen.

Im allgemeinen sind zwar NCO-Gruppen im Endprodukt unerwünscht. Sie können jedoch verwendet werden, um z.B. hydrophobe oder ionische Strukturelemente einzuführen.

Hydrophobe Strukturelemente können beispielsweise durch Reaktion von NCOterminierten Oligomeren mit Monoolen oder monofunktionellen Aminen mit ≥ 2 C-Atomen, insbesondere ≥ 6, ≥ 10 oder ≥ 16 C-Atomen erhalten werden. Konkret seien genannt: Poly-Ethylen/Butylen mit 1 OH-Gruppe, z.B. mit einem OH-Äquivalentgewicht von 3600 (Kraton L 1203) sowie 1-Hexanol, 1-Heptanol, 1-Octanol, 1-Nonanol, 1-Decanol, 1-Undecanol, 10-Undecen-1-ol, 1-Dodecanol, 1-Tridecanol, 1-Tetradecanol, 1-Pentadecanol, 1-Hexadecanol, 1-Heptadecanol, 1-Octadecanol, 9-cis-Octadecen-1-ol, 9-trans-Octadecen-1-ol, 9-cis-Octadecen-1,12-diol, all-cis-9,12-Octadecadien-1-ol, all-cis-9,12,15-Octadecatrien-1-ol, 1-Nonadecanol, 1-Eicosanol, 9-cis-Eicosen-1-ol, 5,8,11,14-Eicosatetraen-1-ol, 1-Heneicosanol, 1-Docosanol, 13-cis-Docosen-1-ol, 13-trans-Docosen-1-ol. Auch die entsprechenden Fettamine sind als hydrophobierende Strukturelemente möglich.

Eine weitere Möglichkeit zur Einführung ionenbildender Strukturen ist schließlich die Reaktion NCO-terminierter Oligomerer mit Hydroxycarbonsäuren oder Aminocarbonsäuren mit Alkylen-, Alkenylen- oder Arylen-Gruppierungen wie bei den Dicarbonsäureanhydriden. Als Beispiele seien genannt: Glykolsäure, Milchsäure, Capronsäure und Mandelsäure sowie Aminocapronsäure, Aminododecansäure, Glycin, Alanin und Phenylalanin.

In einer bevorzugten Ausführungsform der Erfindung wird als Komponente B ein nichtionisches Polyurethan mit einem Molekulargewicht (Mₙ) von mindestens etwa 2.000 eingesetzt, insbesondere ein nichtionischen Polyurethan, das durch Umsetzung mindestens eines Polyisocyanats mit mindestens einem Polyalkylenglykol mit einem Molekulargewicht von mindestens 1.000 erhältlich ist. Das als Komponente B eingesetzte nichtionische Polyurethan weist bei 150°C eine Viskosität von 500 bis 80.000 mPas, bevorzugt 1000 bis 60.000 mPas und insbesondere bevorzugt 2000 bis 40.000 mPas auf (gemessen nach Brookfield, Spindel 27, ASTM D 3236-88).

Die Verwendung des nichtionischen Polyurethans führt zu einer besseren Produktstabilität/-Homogenität des Klebstoffes bei der Herstellung und Applikation. Es verbessert insbesondere die rheologischen Eigenschaften der KlebstoffZusammensetzung. Dies zeigt sich beispielsweise beim Einsatz auf schnelllaufenden Maschinen (ca. 600 m/min): Mit den erfindungsgemäßen Schmelzklebstoffen werden bei der Applikation mit Spraysystemen gleichmäßige Klebstofffäden - und keine "spots" - erzeugt.

Bevorzugt liegt Komponente A als Salz vor.
In dem erfindungsgemäßen wasserlöslichen Schmelzklebstoff dient die als Komponente C eingesetzte anorganische oder organische Base dazu, die Solubilisierung der Komponente A beim Mischen der Klebstoffzusammensetzung mit Wasser herbeizuführen. Als anorganische Basen können hierzu beispielsweise Natronlauge oder Kalilauge eingesetzt werden.

In die Gruppe der organischen Basen fallen beispielsweise aliphatische Aminoalkohle. Im Rahmen der vorliegenden Erfindung ist der Einsatz von Alkanolaminen, insbesondere Trialkanolaminen, mit 2 bis 6 C-Atome im Alkanolrest, bevorzugt, wobei die Länge der C-Kette in den Alkanolresten eines Moleküls gleich oder unterschiedlich sein kann.

Insbesondere bei Verwendung von Triethanolamin wird eine klare Lösung des Schmelzklebstoffes in Wasser erhalten.

Die Menge an Komponente C im erfindungsgemäßen wasserlöslichen Schmelzklebstoff beträgt 10 bis 45 Gew.-%, bevorzugt 12 bis 35 Gew.-% und insbesondere bevorzugt 15 bis 25 Gew.-%.

Der Schmelzklebstoff kann 0 bis 20 Gew.-% weitere Zusatzstoffe enthalten, beispielsweise Basispolymere, Weichmacher, rheologische Additive, Antioxidantien, UV-Stabilisatoren, Farbstoffe oder klebrigmachende Harze (Tackifier), sowie Wasser und/oder organische Lösemittel bis maximal 3 Gew-%, sofern diese Zusatzstoffe die Wasserlöslichkeit der Schmelzklebstoffzusammensetzung nicht beeinträchtigen.

Als Tackifier werden beispielsweise Kohlenwasserstoffharze eingesetzt, insbesondere C5- oder C9-Harze oder mit C5-Harzen modifizierte C9-Harze. Weiterhin zum Einsatz als Tackifier geeignet sind Harze auf Basis reiner Kohlenwasserstoffmonomerer, beispielsweise Harze wie sie aus der Polymerisation von Mischungen aus Styrol, α-Methylstyrol und Vinyltoluol erhältlich sind. Die genannten Kohlenwasserstoffharze können teilhydriert oder vollhydriert sein.

Ebenfalls zum Einsatz als Tackifier geeignet sind Naturharze wie Balsamharz wie es beispielsweise aus Bäumen gewonnen wird oder Tallharz, das bei der Papierherstellung anfällt. Die Naturharze können in der oben genannten Form als Tackifier eingesetzt werden, es ist jedoch ebenso möglich, die genannten Harze nach Veresterung mit entsprechenden polyfunktionellen Alkoholen als Pentaerythritester, Glycerinester, Diethylenglykolester, Triethylenglykolester oder Methylester einzusetzen.

Ebenso als Tackifier geeignet sind die Polyterpenharze. Terpene fallen bei der Trennung von Harzsäuren von deren natürlichen Lösemitteln an und lassen sich zu Polyterpenharzen polymerisieren. Ebenfalls zum Einsatz als Tackifier geeignet sind die durch Phenolmodifizierung aus Polyterpenharzen gewinnbaren Terpenphenolharze. Bevorzugt sind wasserlösliche Tackifier.

Als Antioxidantien werden dem Fachmann bekannte Antioxidantien eingesetzt. Es sind Antioxidantien auf Basis von Thioethern, gehinderten und/oder multifunktionellen Phenolen, Hydroxylamin oder organischer Phosphorverbindungen, beispielsweise organischer Diphoshite. Die Antioxidantien werden einzeln oder in Mischung eingesetzt. Bevorzugt werden wasserlösliche Antioxidantien eingesetzt. Typische kommerzielle erhältliche Antioxidantien werden von der Fa. Ciba unter den Handelnamen Irganox 1010 und Irganox 1076 geliefert.
Die Menge an Antioxidantien in der Gesamtzusammensetzung beträgt 0,05 bis 2,5 Gew.-%, bevorzugt 0,1 bis 2 Gew.-% und insbesondere bevorzugt 0,25 bis 1,5 Gew.-%.

Die Zusatzstoffe können einzeln oder als Gemisch aus zwei oder mehr der genannten Substanzen im Schmelzklebstoff vorliegen. Die Menge der Zusatzstoffe sollte etwa 20 Gew.-% (bezogen auf den Gesamten Schmelzklebstoff) nicht überschreiten. Geeignet sind beispielsweise Mengen von etwa 0,1 bis etwa 15 Gew.%, oder etwa 1 bis etwa 10 Gew.-% in einer bevorzugten Ausführungsform der Erfindung werden beispielsweise etwa 2, 3, 4, 5, 7 oder 9 Gew.-% Zusatzstoffe eingesetzt.

Desweiteren beinhaltet die Erfindung ein Verfahren zur Herstellung eines wasserlöslichen Schmelzklebstoffes, in dem man bei einer Temperatur von 70 bis 150 °C, bevorzugt 90 °C bis 120°C:
40 bis 70 Gew.-% mindestens eines Homo- oder Copolymeren mit freien Carbonsäuregruppen auf Basis ethylenisch ungesättigter Monomere (Komponente A), insbesondere bevorzugt ein Vinylacetat-Crotonsäure-Copolymer mit einer Säurezahl von 10 bis 200 mg KOH/g (gemessen nach ASTM D 974) und 15 bis 40 Gew.-% mindestens eines wasserlöslichen oder wasserdispergierbaren Polyurethans (Komponente B), insbesondere ein nichtionisches Polyurethan mit einer Viskosität von 500 bis 80.000 mPas bei 150 °C (gemessen nach Brookfield, Spindel 27, ASTM-D 3236-88)
sowie gegebenenfalls weitere Zusatzstoffe, beispielsweise Antioxidantien,
zu einer homogenen Schmelze vermischt und anschließend bei einer Temperatur von maximal 100 °C, bevorzugt von 80 bis 100 °C und insbesondere bevorzugt von 85 bis 95 °C
10 bis 45 Gew.-% mindestens einer anorganischen oder organischen Base, bevorzugt ein Trialkanolamin, insbesondere bevorzugt Triethanolamin, hinzufügt sowie gegebenenfalls weitere Zusatzstoffe,
wobei die gesamte Menge an Zusatzstoffen 0 bis 20 Gew.-% beträgt und die Summe der Komponenten 100 Gew.-% ergibt,
und bis zum Entstehen einer homogenen Mischung rührt.
Der erfindungsgemäße wasserlösliche Schmelzklebstoff weist eine Viskosität auf, die es erlaubt, den Schmelzklebstoff im Rahmen üblicher Auftragsverfahren einzusetzen. Vorteihafterweise weist der Schmelzklebstoff daher eine Viskosität (Brookfield Thermosell, Spindel 27, ASTM D 3236-88) auf, die in einem Bereich von 1000 mPas bis 20.000 mPas, bevorzugt von 1500 mPas bis 15000 mPas und insbesondere bevorzugt von 2000 bis 8000 mPas bei 120°C liegt.

Bevorzugt wird der erfindungsgemäße wasserlösliche Schmelzklebstoff als Klebstoff in der Textil-, Verpackungs- und Papierindustrie zum Verkleben von Papier oder textilen Flächengebilden verwendet.
Der erfindungsgemäße wasserlösliche Schmelzklebstoff ist für die Herstellung mindestens zweilagiger Papierverbunde geeignet, insbesondere für die Herstellung mindestens zweilagiger Hygienepapiere und/oder textiler Verbunde.
Gegenstand der vorliegenden Erfindung sind daher auch mindestens zweilagige Papierverbunde, insbesondere Hygienepapiere, sowie textile Verbunde, die den erfindungsgemäßen Schmelzklebstoff enthalten. Desweiteren beinhaltet die Erfindung ein Verfahren zur Herstellung mindestens zweilagiger Papierverbunde und textiler Verbunde unter Verwendung des erfindungsgemäßen Schmelzklebstoffes.

Textile Verbunde finden insbesondere Verwendung in der Bekleidungsindustrie. Unter textilen Verbunden werden mindestens zweilagige Verbunde aus textilen Flächengebilden, beispielsweise Strick-, Web- oder Wirkwaren verstanden. Die textilen Flächengebilde bestehen aus Synthese- und/oder Kunstfasern, beispielsweise Polyester, Polyamid, Polypropylen, Baumwolle, Viskose und Gemischen hieraus.
Die textilen Flächengebilde können dabei mit Kunststofffolien laminiert sein. Insbesondere sind es Kunststofffolien, die wasser- und winddicht, aber wasserdampfdurchlässig sind. Derartige Textillaminate sind beispielsweise in der EP 0238014 offenbart. Der erfindungsgemäße Schmelzklebstoff wird auf mindestens eine Oberfläche eines ersten textilen Flächengebildes aufgetragen, welches bereits Bestandteil eines textilen Verbundes sein kann, und gegen die Oberfläche eines zweiten textilen Flächengebildes kaschiert. Nach der Kaschierung wird der textile Verbund auf die gewünschte Form zugeschnitten und an den gewünschten Stellen vernäht. Da der erfindungsgemäße Schmelzklebstoff bevorzugt der temporären Fixierung für die Dauer des Nähvorgangs dient, wird er aus dem vernähten textilen Verbund ausgewaschen. Auf diese Weise werden die sonst üblichen verwendeten mechanischen Hilfsmittel zur Fixierung, der zu vernähenden textilen Verbunde, wie Nadeln, Klammem u.ä., überflüssig und die Produktivität wird erhöht.

Unter "Hygienepapier" werden im Rahmen der vorliegenden Erfindung überwiegend im Haushalt, in Gemeinschaftseinrichtungen und zur persönlichen Hygiene verwendete Papiersorten, z. B. Haushaltstücher (Küchenkrepp), Papierhandtücher, Papiertaschentücher, Papierservietten, Toilettenpapier, Kinderwindeln und dergleichen verstanden. Der erfindungsgemäße wasserlösliche Schmelzklebstoff eignet sich insbesondere für die Herstellung von Papierverbunden aus Tissue. Unter "Tissue" wird ein besonders dünnes, weiches, überwiegend holzfreies Material, ggf. mit feiner (Trocken) Kreppung, verstanden. Das Material ist sehr saugfähig und weist in einer Einzellage in der Regel ein Flächengewicht von > 25 g/m² (vor der Kreppung) auf. Aus solchen Tissue-Verbunden, wie sie nach dem erfindungsgemäßen Verfahren erhältlich sind, werden hauptsächlich Toilettenpapier, Papiertaschentücher oder Kosmetiktücher hergestellt.

Die Herstellung mindestens zweilagiger Papierverbunde bzw. textiler Verbunde beinhaltet in der Regel mindestens einen Verfahrensschritt, bei dem der erfindungsgemäße Schmelzklebstoff auf eine erste Papierlage bzw. auf mindestens eine Oberfläche eines ersten textilen Flächengebildes aufgetragen wird und in einem bestimmten zeitlichen und räumlichen Abstand eine zweite Papierlage bzw. ein zweites textiles Flächengebilde auf die Klebstoffseite der ersten Papierlage bzw. der mindestens einen Oberfläche eines ersten textilen Flächengebildes kaschiert wird. Damit eine ausreichende Haftung zwischen der ersten und der zweiten Substratlage entsteht, muß der Schmelzklebstoff zum Zeitpunkt des Aufkaschierens der zweiten Substratlage noch ausreichend klebrig sein, d.h., er darf noch nicht physikalisch ausgehärtet sein. Die Zeit nach dem Auftrag des Schmelzklebstoffs, in welcher der Klebstoff ausreichende Klebrigkeit zum Aufkaschieren einer zweiten Substratlage besitzt, wird im folgenden "offene Zeit" genannt.
Unter "ausreichend Klebrig" wird eine Klebrigkeit verstanden, die eine Verbindung zwischen den Papierlagen erzeugt, die eine Schälkraft von mehr als 0 N/cm aufweist.
Die Maschinengeschwindigkeit im Kaschierverfahren zur Herstellung von textilen Verbunden beträgt maximal 100 m/min.
Bei üblichen Maschinengeschwindigkeiten für die Herstellung mindestens zweilagiger Papierverbunde von beispielsweise bis zu 600 m/min reicht es im allgemeinen aus, wenn der Schmelzklebstoff eine offene Zeit von etwa 0,1 bis etwa 1 Sekunden, beispielsweise etwa 0,2 bis etwa 0,5 Sekunden, aufweist. Wenn der Schmelzklebstoff erst dann eingesetzt werden soll, wenn die volle Maschinengeschwindigkeit erreicht ist, ist eine offene Zeit in der oben genannten Größenordnung in der Regel ausreichend. Soll der Schmelzklebstoff jedoch beispielsweise schon während der Anlaufphase der Maschine zu einer Verbindung von mindestens zwei Papierlagen führen, so sollte die offene Zeit einen größeren Zeitraum als den oben angegebenen umfassen. Vorteilhaft sind dann beispielsweise offene Zeiten von etwa 1 bis etwa 10 Sekunden, beispielsweise etwa 2 bis etwa 8 oder etwa 4 bis etwa 6 Sekunden.

Die erfindungsgemäßen wasserlöslichen Schmelzklebstoffe besitzen den Vorteil, daß sie die Rückführung von bereits verklebten Papierlagen in den Stoffkreislauf zur Herstellung neuer Papierlagen vereinfachen. Hierzu werden die bereits verklebten Papierlagen in der Regel mit Wasser versetzt, das den Schmelzklebstoff auflöst und gleichzeitig einen zur weiteren Bearbeitung geeigneten Faserbrei erzeugt. Dieses Wasser weist in der Regel eine gegenüber der Umgebungstemperatur erhöhte Temperatur von beispielsweise etwa 25 bis etwa 80°C auf. Mit der Wasserlöslichkeit von mindestens 3 Gramm des Schmelzklebstoffes in 600g Wasser bei einem pH-Wert von 5 und 8 ist sichergestellt, daß der Klebstoff im Wiederaufbereitungsverfahren in Lösung bleibt, so daß Produktionsausfälle, hervorgerufen durch "Stickies", vermieden werden.

In einer bevorzugten Ausführungsform des Verfahrens zur Herstellung mindestens zweilagiger Papierverbunde oder textiler Verbunde werden erfindungsgemäße Schmelzklebstoffe eingesetzt, die im wesentlichen unbegrenzt mit Wasser mischbar sind, d.h., die bei einer Konzentration von mindestens etwa 10 Gew.-% oder mehr, beispielsweise etwa 20 Gew.-% oder etwa 50 Gew.-% oder darüber, keine Mischungslücke aufweisen.

Die Verarbeitung des erfindungsgemäßen wasserlöslichen Schmelzklebstoffs erfolgt in der Regel durch Auftrag des Klebstoffs auf die Papierlagen oder mindestens eine Oberfläche eines textilen Flächengebildes mittels üblicher Auftragsverfahren in geschmolzenem Zustand. Geeignete Auftragsverfahren sind beispielsweise der Auftrag durch Walzen, Schlitzdüsen oder Sprühdüsen und für textile Verbunde insbesondere der Schablonenauftrag.

Wird mittels einer Walze aufgetragen, so lassen sich in der Regel nur recht hohe Flächengewichte an Klebstoff realisieren. Der Walzenauftrag dient daher üblicherweise einer festen Verbindung der einzelnen Papierlagen. Für den Walzenauftrag sind beispielsweise Schmelzklebstoffe geeignet, die bei etwa 120 bis etwa 150°C eine Schmelzviskosität (Brookfield Thermosell, Spindel 27, ASTM D 3236-88) von etwa 1.000 bis etwa 6.000, insbesondere etwa 2.000 bis etwa 3.000 mPas aufweisen. Mittels Walzenauftrag ist beispielsweise die Herstellung von befeuchtungsklebrigen Papieren möglich.
Unter "befeuchtungsklebrigen Papieren" werden Papiere verstanden, die durch Befeuchtung in selbstklebende Systeme überführt werden können. Hierzu weist das Papier bzw. eine erste Papierlage mindestens einseitig eine Schicht auf, die durch Befeuchtung mittels Wasser klebrig gemacht und beispielsweise auf ein zweite Papierlage aufgebracht werden kann. Nach der Verdunstung des Wassers haften die Papierlagen adhäsiv aneinander. Beispiele für solche Materialien sind Briefmarken, Briefumschläge, Etiketten und dergleichen.

Wird der Schmelzklebstoff mittels einer Schlitzdüse aufgetragen, so wird dazu in der Regel ein Schmelzklebstoff eingesetzt, der bei etwa 120 bis etwa 150°C eine Schmelzviskosität (Brookfield Thermosel, Spindel 27, ASTM D 3236-88) von etwa 400 bis etwa 20.000 mPas, insbesondere etwa 600 bis etwa 5.000 mPas aufweist.

Zur Verklebung von Tissues wird vorzugsweise der Auftrag des Schmelzklebstoffs mittels einer Sprühdüse bevorzugt, wobei kein vollflächiger Auftrag erzeugt wird. Die Tissueverklebung läßt sich sowohl mittels atomisierender als auch mittels nichtatomisierender Sprühdüsen durchführen, im letzteren Fall wird auch von Spinnsprühen gesprochen.

Atomisierende Sprühdüsen erfordern in der Regel einen Schmelzklebstoff, der bei etwa 120 bis etwa 150°C eine Schmelzviskosität (Brookfield Thermosell, Spindel 27, ASTM D 3236-88) von etwa 400 bis etwa 10.000, insbesondere etwa 600 bis etwa 5.000 mPas aufweist. Nichtatomisierende Sprühdüsen erfordern Schmelzklebstoffe mit einer geringfügig höheren Viskosität, um die erforderliche Fadenkohäsion zu gewährleisten. Geeignet sind beispielsweise Schmelzklebstoffe mit einer Schmelzviskosität (Brookfield Thermosell, Spindel 27) von etwa 3.000 bis etwa 10.000 mPas bei einer Temperatur von etwa 120 bis etwa 150°C.

Die Erfindung wird nachfolgend durch Beispiele näher erläutert.

### Beispiele

### Herstellung der Schmelzklebstoffe

### Beispiel 1

34 Gew.-% eines nichtionischen Polyurethans (Technomelt 337VP, Henkel KGaA) mit einer Wasserlöslichkeit von 3 g/600g in Wasser bei 40°C und einer Viskosität von 4000 mPas bei 150°C (Brookfield Thermosell, Spindel 27, ASTM D 3236-88) wurden zusammen mit 50,5 Gew.-% Synthomer MCT 5 (Vinylacetat-Crotonsäure-Copolymer, Fa. Synthomer, Säurezahl 35-45 mg KOH/g) bei einer Temperatur von 120°C homogenisiert.
Anschließend wurde die Mischung auf 90°C abgekühlt und mit
15 Gew.-% Triethanolamin sowie
0,5 Gew.-% eines Antioxidants (Irganox 1010, Fa. Ciba) versetzt.
Es wurde gerührt, bis eine homogene Schmelze entstanden ist.

### Beispiel 2

28 Gew.-% eines nichtionischen Polyurethans (Technomelt 337VP, Henkel KGaA) mit einer Wasserlöslichkeit von 3 g/600g in Wasser bei 40°C und einer Viskosität von 4000 mPas bei 150°C (Brookfield Thermosell, Spindel 27, ASTM D 3236-88) wurden zusammen mit 54 Gew.-% Synthomer MCT 5 (Vinylacetat-Crotonsäure-Copolymer, Fa. Synthomer, Säurezahl 35-45 mg KOH/g) bei einer Temperatur von 120°C homogenisiert.
Anschließend wurde die Mischung auf 90°C abgekühlt und mit
17,5 Gew.-% Triethanolamin sowie
0,5 Gew.-% eines Antioxidants (Irganox 1010, Fa. Ciba) versetzt.
Es wurde gerührt, bis eine homogene Schmelze entstanden ist.

### Beispiel 3

16 Gew.-% eines nichtionischen Polyurethans (Technomelt 337VP, Henkel KGaA) mit einer Wasserlöslichkeit von 3g/600g in Wasser bei 40°C und einer Viskosität von 4000 mPas bei 150°C (Brookfield Thermosell, Spindel 27, ASTM D 3236-88) wurden zusammen mit 63 Gew.-% Synthomer MCT 5 (Vinylacetat-Crotonsäure-Copolymer, Fa. Synthomer, Säurezahl 35-45 mg KOH/g) bei einer Temperatur von 120°C homogenisiert.
Anschließend wurde die Mischung auf 90°C abgekühlt und mit
20,5 Gew.-% Triethanolamin sowie
0,5 Gew.-% eines Antioxidants (Irganox 1010, Fa. Ciba) versetzt.
Es wurde gerührt, bis eine homogene Schmelze entstanden ist.

### Ergebnisse und Meßmethoden:

Die Eigenschaften der erfindungsgemäßen Beispiele 1 bis 3 und der Vergleichsbeispiele 4 und 5 (Beispiele 3 und 5 aus der US 4,129,539) sind in Tab. 1 wiedergegeben. Die Viskosität wurde nach Brookfield (Thermosell Spindel 27, ASTM D3236-88) bestimmt.

Der Parameter "Farbe" wird visuell bestimmt und bezieht sich a) auf das feste Produkt und b) auf die Schmelze.
Unter Kompatibilität wird die Homogenität der Mischung in der Schmelze und als Feststoff verstanden.
Bei den Vergleichsbeispielen wurde während des Abkühlvorgangs der Klebstoff-Schmelze Separation beobachtet in der Art, daß es zur Tropfenbildung innerhalb der Schmelze und auf der Schmelze-Oberfläche kam. Die Wärmestabilität wurde in Anlehnung an die Unichim -Methode Nr. 665 bestimmt:
200g des Schmelzklebstoffes werden in einen Aluminiumbehälter eingewogen und bei 120°C in einem Ölbad gelagert. Nachdem der Klebstoff eine homogene Schmelze gebildet hat, wird eine Probe von 1,5g entnommen und in eine runde Form von 1,3 cm Durchmesser gegossen. Die Farbe des erkalteten Schmelzklebstoffes wird als "Standardfarbe" zum Zeitpunkt t=0 definiert. Über einen Zeitraum von 16 Stunden wird stündlich die Farbe visuell geprüft, in dem jeweils analog zum obigen Verfahren zur Bestimmung der "Standardfarbe" eine Probe entnommen und nach dem Erkalten beurteilt wird. Ändert sich die Farbe nur unwesentlich gegenüber der Standardfarbe zu einem schwach gelblichen Farbton, wird die Wärmestabilität als gut eingestuft. Eine Farbänderung zu einem kräftigen Gelbton wird als akzeptabel eingestuft.

Wasserlöslichkeit (in Anlehnung an die Europäische Norm EN 1720)
Es werden zwei 800ml-Bechergläser mit jeweils 600g Wasser gefüllt. Das Wasser im ersten Becherglas (BG1) wird mit Phosphorsäurelösung (1 Teil Phosphorsäure auf 100 Teile Wasser) auf pH 5 (± 0,1) eingestellt. Das Wasser im zweiten Becherglas (BG2) wird mit wäßriger Natriumhydroxidlösung (1 Teil Na0H auf 100 Teile Wasser) auf pH 8 (± 0,1) eingestellt.
Beide Bechergläser werden auf 40°C temperiert. Zwei Proben von jeweils 3g des Klebstoffes werden vorbereitet, in dem ein getrockneter Klebstofffilm von ca. 200g/m² in 1 cm²-Stücke geschnitten wird. Jeweils 3g der geschnittenen Klebstofffilm-Proben werden unter Rühren in die Bechergläser BG1 und BG2 eingefüllt und 90 min bei 40°C gerührt.
Anschließend wird sofort^{*)} der Inhalt von BG1 und BG2 vollständig jeweils durch einen Filter mit einer Porengröße von 100 Mikrometer filtriert, wobei das Gewicht der Filter vor der Filtration bestimmt wurde. Die Filter werden im Trockenschrank bei 60°C für 2 Stunden bis zur Massenkonstanz getrocknet und anschließend gewogen. Eine Menge von 0 bis 0,5 Gew.-% Filterrückstand, bezogen auf die eingesetzte Klebstoffmenge zeigt an, daß der Klebstoff gut dispergierbar und für den Recyclingprozeß geeignet ist.
^{*)}Anmerkung: Unmittelbar vor dem Filtrationsvorgang wird visuell geprüft, ob das Dispergieren der Klebstoffstücke zu einer opaken/translucenten oder klaren Lösung geführt hat. Die visuelle Prüfung findet im Vergleich zu Wasser als Standard statt. Der Standard ist BG1 und BG2 ohne Klebstofffilmstücke. Die erfindungsgemäßen Klebstoffe zeigen visuell keinen Unterschied zum Standard, sind also klar löslich.

**Tab. 1**

| **Parameter** | **Beispiel 1** | **Beispiel 2** | **Beispiel 3** | **Vergleichsbeispiel 4** | **Vergleichsbeispiel 5** |
|---|---|---|---|---|---|
| **Viskosität (120°C)** | 7000-8000 mPas | 5500-6500 mPas | 8000-9000 mPas | 2500-3000 mPas | 5000-6000 mPas |
| **Wasserlöslichkeit (3g Klebstoff in 600g Wasser, pH 5 und pH 8 bei 40°C** | Klare und stabile Lösung | Klare und stabile Lösung | Klare und stabile Lösung | Dispergierbar, trüb und nicht stabil | Dispergierbar, trüb und nicht stabil |
| **Farbe** | a) Hell gelb | a) Hell gelb | a) Hell gelb | a) Weißlich | a) Weißlich |
| **a) Feststoff** | b) Durchsichtig | b) Durchsichtig | b) Durchsichtig | b) opak | b) opak |
| **b) Schmelze** | | | | | |
| **Kompatibilität** | Sehr gut | Sehr gut | Sehr gut | Tendenz zur Inkompatibilität | Tendenz zur Inkompatibilität |
| **getrockneter Klebstofffilm** | Sehr weich | Sehr weich | Sehr weich | Starr | Starr |
| **Wärmestabilität** | Gut | Gut | Gut | Akzeptabel | Akzeptabel |
| **Geruch** | Gering | Gering | Gering | Mäßig | Stark |

## Patentansprüche

1. Wasserlöslicher Schmelzklebstoff, enthaltend
40 bis 70 Gew.-% mindestens eines Homo- oder Copolymeren mit freien Carbonsäuregruppen auf Basis ethylenisch ungesättigter Monomere (Komponente A),
15 bis 45 Gew.-% mindestens eines wasserlöslichen oder wasserdispergierbaren Polyurethans (Komponente B) und
10 bis 45 Gew.-% mindestens einer anorganischen oder organischen Base (Komponente C),
sowie 0 bis 20 Gew.-% weiterer Zusatzstoffe,
wobei die Summe der Komponenten 100 Gew.-% ergibt.

2. Wasserlöslicher Schmelzklebstoff nach Anspruch 1, **dadurch gekennzeichnet, daß** er als Komponente A ein Vinylacetat-Crotonsäure-Copolymer mit einer Säurezahl von 10 bis 200 mg KOH/g (ASTM D 974)enthält.

3. Wasserlöslicher Schmelzklebstoff nach Anspruch 1 oder 2, **dadurch gekennzeichnet, daß** er als Komponente B ein nichtionisches Polyurethan mit einer Viskosität von 500 bis 80 000 mPas bei 150°C (gemessen nach Brookfield, Thermosell, Spindel 27, ASTM D 3236-88) enthält.

4. Wasserlöslicher Schmelzklebstoff nach mindestens einem der Ansprüche 1 bis 3, **dadurch gekennzeichnet, daß** er als Komponente C ein Alkanolamin, bevorzugt ein Trialkanolamin, mit 2 bis 6 C-Atomen im jeweiligen Alkanolrest enthält, wobei die Länge der C-Kette in den Alkanolresten eines Moleküls gleich oder unterschiedlich sein kann, insbesondere bevorzugt ist Komponente C Triethanolamin.

5. Wasserlöslicher Schmelzklebstoff nach mindestens einem der Ansprüche 1 bis 4, **dadurch gekennzeichnet, daß** er bei 120 °C eine Viskosität von 1000 bis 20000 mPas (gemessen nach Brookfield, Thermosell, Spindel 27, ASTM D 3236-88) besitzt.

6. Verfahren zur Herstellung eines wasserlöslichen Schmelzklebstoffes, indem man bei einer Temperatur von 70°C bis 150°C:
40 bis 70 Gew.-% mindestens eines Homo- oder Copolymeren mit freien Carbonsäuregruppen auf Basis ethylenisch ungesättigter Monomere (Komponente A) und
15 bis 40 Gew.-% mindestens eines wasserlöslichen oder wasserdispergierbaren Polyurethans (Komponente B) sowie ggf. weitere Zusatzstoffe,
zu einer homogenen Schmelze vermischt und anschließend bei einer Temperatur von maximal 80 bis 100 °C
10 bis 45 Gew.-% mindestens einer anorganischen oder organischen Base (Komponente C) hinzufügt, sowie ggf. weitere Zusatzstoffe, wobei die gesamte Menge an Zusatzstoffen 0 bis 20 Gew.-% beträgt und die Summe der Komponenten 100 Gew.-% ergibt,
und bis zum Entstehen einer homogenen Mischung rührt.

7. Verwendung eines wasserlöslichen Schmelzklebstoffes nach einem der Ansprüche 1 bis 5 und/oder hergestellt nach Anspruch 6 als Klebstoff zum Verkleben von Papier und/oder textilen Flächengebilden.

8. Verwendung nach Anspruch 7 für die Herstellung befeuchtungsklebriger Papiere oder mindestens zweilagiger Hygienepapiere, insbesondere Tissue.

9. Mindestens zweilagige Hygienepapiere, enthaltend einen wasserlöslichen Schmelzklebstoff nach mindestens einem der Ansprüche 1 bis 5.

10. Mindestens zweilagige textile Verbunde, enthaltend einen wasserlöslichen Schmelzklebstoff nach mindestens einem der Ansprüche 1 bis 5.

11. Befeuchtungsklebrige Papiere, enthaltend einen wasserlöslichen Schmelzklebstoff nach mindestens einem der Ansprüche 1 bis 5.

12. Verfahren zur Herstellung mindestens zweilagiger Papierverbunde, indem man auf eine erste Papierlage einen wasserlöslichen Schmelzklebstoff nach mindestens einem der Ansprüche 1 bis 5 aufträgt und mindestens eine zweite Papierlage auf der Klebstoffseite der ersten Papierlage aufkaschiert.

13. Verfahren zur Herstellung befeuchtungsklebriger Papiere, indem man einen wasserlöslichen Schmelzklebstoff nach mindestens einem der Ansprüche 1 bis 5 mindestens einseitig auf Papier aufträgt.

14. Verfahren zur Herstellung textiler Verbunde, indem man einen wasserlöslichen Schmelzklebstoff nach mindestens einem der Ansprüche 1 bis 5 auf mindestens eine Oberfläche eines ersten textilen Flächengebildes aufträgt und mindestens ein zweites textiles Flächengebilde auf der Klebstoffseite des ersten textilen Flächengebildes aufträgt, bevorzugt die so erhaltenen textilen Verbunde vernäht und insbesondere bevorzugt den wasserlöslichen Schmelzklebstoff aus dem vernähten textilen Verbund durch Waschen mit Wasser entfernt.

## Claims

1. A water-soluble hot-melt adhesive containing
40 to 70 wt.% of at least one homo- or copolymer with free carboxylic acid groups based on ethylenically unsaturated monomers (component A),
15 to 45 wt.% of at least one water-soluble or water-dispersible polyurethane (component B) and
10 to 45 wt.% of at least one inorganic or organic base (component C), together with 0 to 20 wt.% of further additives,
the sum of the components adding up to 100 wt.%.

2. A water-soluble hot-melt adhesive according to claim 1, **characterised in that**, as component A, it contains a vinyl acetate/crotonic acid copolymer with an acid value of 10 to 200 mg of KOH/g (ASTM D 974).

3. A water-soluble hot-melt adhesive according to claim 1 or claim 2, **characterised in that,** as component B, it contains a nonionic polyurethane with a viscosity of 500 to 80000 mPa·s at 150°C (measured according to Brookfield, Thermocell, spindle 27, ASTM D 3236-88).

4. A water-soluble hot-melt adhesive according to at least one of claims 1 to 3, **characterised in that**, as component C, it contains an alkanolamine, preferably a trialkanolamine, with 2 to 6 C atoms in the particular alkanol residue, the length of the C chain in the alkanol residues of a molecule possibly being identical or different, component C particularly preferably being triethanolamine.

5. A water-soluble hot-melt adhesive according to at least one of claims 1 to 4, **characterised in that** it has a viscosity of 1000 to 20000 mPa·s at 120°C (measured according to Brookfield, Thermocell, spindle 27, ASTM D 3236-88).

6. A method for producing a water-soluble hot-melt adhesive by mixing at a temperature of 70°C to 150°C:
40 to 70 wt.% of at least one homo- or copolymer with free carboxylic acid groups based on ethylenically unsaturated monomers (component A) and
15 to 40 wt.% of at least one water-soluble or water-dispersible polyurethane (component B) and optionally further additives,
to yield a homogeneous melt and then adding at a temperature of at most 80 to 100°C
10 to 45 wt.% of at least one inorganic or organic base (component C), and optionally further additives, the entire quantity of additives amounting to 0 to 20 wt.% and the sum of the components adding up to 100 wt.%,
and stirring until a homogeneous mixture is obtained.

7. Use of a water-soluble hot-melt adhesive according to any one of claims 1 to 5 and/or produced according to claim 6 as an adhesive for the adhesive bonding of paper and/or textile fabrics.

8. Use according to claim 7 for the production of moisture-adhesive papers or at least two-ply hygiene papers, in particular tissue.

9. At least two-ply hygiene papers containing a water-soluble hot-melt adhesive according to at least one of claims 1 to 5.

10. At least two-ply textile composites containing a water-soluble hot-melt adhesive according to at least one of claims 1 to 5.

11. Moisture-adhesive papers containing a water-soluble hot-melt adhesive according to at least one of claims 1 to 5.

12. A method for producing at least two-ply paper composites by applying a water-soluble hot-melt adhesive according to at least one of claims 1 to 5 onto a first paper ply and laminating at least one second paper ply onto the adhesive side of the first paper ply.

13. A method for producing moisture-adhesive papers by applying a water-soluble hot-melt adhesive according to at least one of claims 1 to 5 onto at least one side of paper.

14. A method for producing textile composites by applying a water-soluble hot-melt adhesive according to at least one of claims 1 to 5 onto at least one surface of a first textile fabric and applying at least one second textile fabric onto the adhesive side of the first textile fabric, preferably stitching the resultant textile composites and particularly preferably removing the water-soluble hot-melt adhesive from the stitched textile composite by washing with water.

## Revendications

1. Adhésif en masse fondue soluble dans l'eau, contenant
- 40 à 70% en poids d'au moins un homopolymère ou copolymère avec des groupes acide carboxylique libres à base de monomères éthyléniquement insaturés (composant A),
- 15 à 45% en poids d'au moins un polyuréthane soluble ou dispersible dans l'eau (composant B) et
- 10 à 45% en poids d'au moins une base inorganique ou organique (composant C),
ainsi que 0 à 20% en poids d'autres additifs
la somme des composants valant 100% en poids.

2. Adhésif en masse fondue soluble dans l'eau selon la revendication 1, **caractérisé en ce qu'**il contient comme composant A un copolymère d'acétate de vinyle-acide crotonique, présentant un indice d'acide de 10 à 200 mg de KOH/g (ASTM D 974).

3. Adhésif en masse fondue soluble dans l'eau selon la revendication 2 ou 2, **caractérisé en ce qu'**il contient comme composant B un polyuréthane non ionique présentant une viscosité de 500 à 80 000 mPa.s à 150°C (mesurée selon Brookfield, Thermocell, broche 27, ASTM D 3236-88).

4. Adhésif en masse fondue soluble dans l'eau selon au moins l'une quelconque des revendications 1 à 3, **caractérisé en ce qu'**il contient comme composant C une alcanolamine, de préférence une trialcanolamine, comprenant 2 à 6 atomes de carbone dans chaque radical alcanol, la longueur de la chaîne carbonée dans les radicaux alcanol d'une molécule pouvant être identique ou différente, de manière particulièrement préférée le composant C est la triéthanolamine.

5. Adhésif en masse fondue soluble dans l'eau selon au moins l'une quelconque des revendications 1 à 4, **caractérisé en ce qu'**il présente à 120°C une viscosité de 1000 à 20 000 mPa.s (mesurée selon Brookfield, Thermocell, broche 27, ASTM D 3236-88).

6. Procédé pour la préparation d'un adhésif en masse fondue soluble dans l'eau, en ce qu'on mélange, à une température de 70°C à 150°C :
- 40 à 70% en poids d'au moins un homopolymère ou copolymère avec des groupes acide carboxylique libres à base de monomères éthyléniquement insaturés (composant A) et
- 15 à 40% en poids d'au moins un polyuréthane soluble ou dispersible dans l'eau (composant B) ainsi que le cas échéant d'autres additifs
en une masse fondue homogène, puis, à une température d'au maximum 80 à 100°C
- on ajoute 10 à 45% en poids d'au moins une base inorganique ou organique (composant C) ainsi que le cas échéant d'autres additifs, la quantité totale d'additifs étant de 0 à 20% en poids et la somme des composants valant 100% en poids,
et on agite jusqu'à la formation d'un mélange homogène.

7. Utilisation d'un adhésif en masse fondue soluble dans l'eau selon l'une quelconque des revendications 1 à 5 et/ou préparé selon la revendication 6 comme adhésif pour le collage de papier et/ou de structures planes textiles.

8. Utilisation selon la revendication 7 pour la préparation de papiers adhésifs par humidification ou de papiers hygiéniques au moins à deux couches, en particulier le papier-mouchoir.

9. Papiers hygiéniques au moins à deux couches, contenant un adhésif en masse fondue soluble dans l'eau selon au moins l'une quelconque des revendications 1 à 5.

10. Composites textiles au moins à deux couches, contenant un adhésif en masse fondue soluble dans l'eau selon au moins l'une quelconque des revendications 1 à 5.

11. Papiers adhésifs par humidification contenant un adhésif en masse fondue soluble dans l'eau selon au moins l'une quelconque des revendications 1 à 5.

12. Procédé pour la préparation de composites en papier au moins à deux couches, en ce qu'on applique sur une première couche de papier un adhésif en masse fondue soluble dans l'eau selon au moins l'une quelconque des revendications 1 à 5 et on contrecolle au moins une deuxième couche de papier sur le côté adhésif de la première couche de papier.

13. Procédé pour la préparation de papiers adhésifs par humidification en ce qu'on applique un adhésif en masse fondue soluble dans l'eau selon au moins l'une quelconque des revendications 1 à 5 au moins d'un côté sur le papier.

14. Procédé pour la préparation de composites textiles, en ce qu'on applique un adhésif en masse fondue soluble dans l'eau selon au moins l'une quelconque des revendications 1 à 5 sur au moins une surface d'une première structure plane textile et on applique au moins une deuxième structure plane textile sur le côté adhésif de la première structure plane textile, on coud de préférence les composites textiles ainsi obtenus et on élimine de manière particulièrement préférée l'adhésif en masse fondue soluble dans l'eau du composite textile cousu par lavage avec de l'eau.
